(19) Europäisches Patentamt
European Patent Office
Office européen des brevets

(11) **EP 3 367 089 A1**

(12) **EUROPEAN PATENT APPLICATION**
published in accordance with Art. 153(4) EPC

(43) Date of publication:
**29.08.2018 Bulletin 2018/35**

(21) Application number: **16841201.3**

(22) Date of filing: **23.05.2016**

(51) Int Cl.:
***G01N 27/62*** (2006.01)

(86) International application number:
**PCT/JP2016/065200**

(87) International publication number:
**WO 2017/038169 (09.03.2017 Gazette 2017/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.08.2015 JP 2015168430**

(71) Applicant: **Shimadzu Corporation
Kyoto-shi, Kyoto-fu 604-8511 (JP)**

(72) Inventor: **FUJITA, Ryo
Kyoto-shi
Kyoto 604-8511 (JP)**

(74) Representative: **Webster, Jeremy Mark et al
Mewburn Ellis LLP
City Tower
40 Basinghall Street
London EC2V 5DE (GB)**

(54) **DEVICE FOR ANALYZING ION MOBILITY**

(57)    An inner space having a rectangular cross section with the long-side-to-short-side ratio greater than one is formed in a housing (20A, 20B) made of an insulator. The inner space forms a desolvation region (4) and a drift region (5). A shutter gate (22) located within the inner space also has a long-side-to-short-side ratio greater than one. A number of conductive wires are stretched over the opening of the gate to form grid electrodes. This configuration allows the shutter gate (22) to have a large opening area while using short conductive wires to de-crease the amount of deflection of the wires due to the potential difference between the wires and thereby prevent the adjacent wires from coming in contact with each other as well as prevent the electric field from being disordered due to an operation for allowing ions to pass through or blocking ions. Since the desolvation region (4) and drift region (5) have a rectangular cross section, the Reynolds number is low, and a diffusion gas forms a laminar flow. Thus, the analysis accuracy and resolving power will also be improved.

Fig. 1

EP 3 367 089 A1

**Description**

TECHNICAL FIELD

The present invention relates to an ion mobility spectrometer in which ions are separated according to their mobilities, and the separated ions are detected or sent to the subsequent section, such as a mass spectrometer section.

BACKGROUND ART

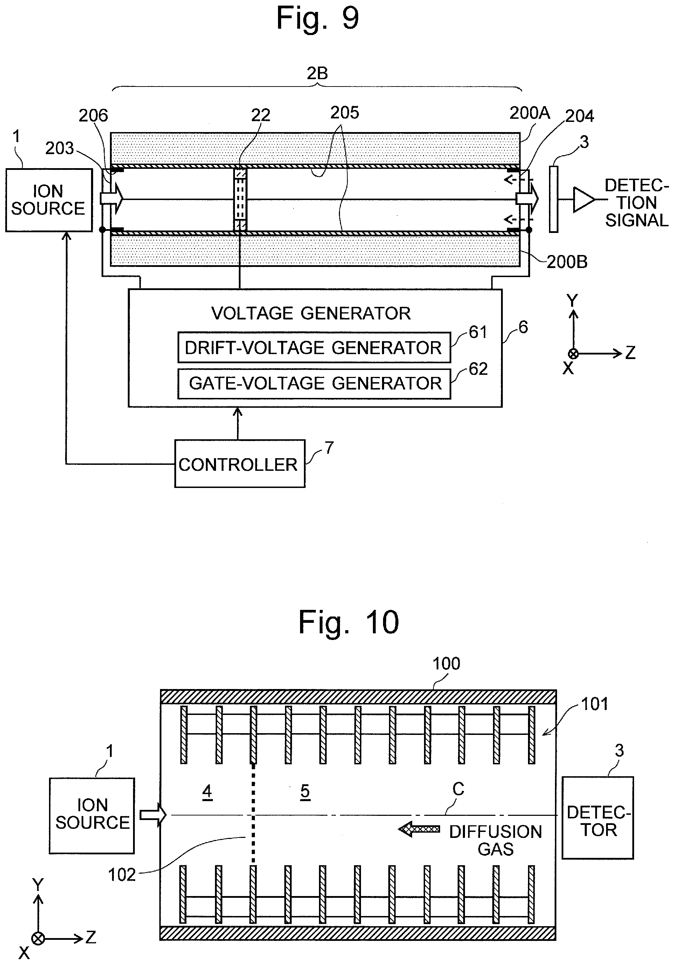

When a molecular ion generated from a sample molecule is made to move in a gas medium (or liquid medium) under the effect of an electric field, the ion moves at a speed proportional to its mobility which is determined by the intensity of the electric field, size of the molecule and other factors. Ion mobility spectrometry (IMS) is a measurement method in which this mobility is utilized for an analysis of sample molecules. Fig. 10 is a schematic configuration diagram of a conventional and common type of ion mobility spectrometer (for example, see Patent Literature 1).

This ion mobility spectrometer includes: an ion source 1 for ionizing component molecules in a liquid sample by an electrospray ionization (ESI) or similar method; a cylindrical drift cell 100 within which a desolvation region 4 and a drift region 5 are formed; and a detector 3 for detecting ions which have travelled through the drift region 5. Additionally, in order to send the ions generated by the ion source 1 through the desolvation region 4 into the drift region 5 in a pulsed form with an extremely short duration, a shutter gate 102 provided at the entrance to the drift region 5. The atmosphere inside the drift cell 100 is maintained at atmospheric pressure or low vacuum of approximately 100 Pa. A number of ring electrodes 101 are arrayed along the ion beam axis C within the drift cell 100. Direct voltages are respectively applied to those ring electrodes 101 to create a uniform electric field having a downward potential gradient in the moving direction of the ions (Z-axis direction in Fig. 10), i.e. an electric field for accelerating ions, within the desolvation region 4 and the drift region 5. A flow of neutral diffusion gas is formed within the drift cell 100 in the opposite direction to the direction of the acceleration by the electric field.

A rough description of an operation of the aforementioned ion mobility spectrometer is as follows:
Various ions generated from a sample in the ion source 1 move through the desolvation region 4 and are temporarily blocked by the shutter gate 102. The shutter gate 102 is subsequently opened for a short period of time, whereupon the ions in a packet-like form are introduced into the drift region 5. The desolvation region 4 is the region for helping the generation of ions by promoting the vaporization of the solvent in the electrically charged droplets from which the solvent has not been sufficiently vaporized within the ion source 1. The ions introduced into the drift region 5 move forward due to the effect of the accelerating electric field, colliding with the counterflowing diffusion gas. Those ions are spatially separated along the Z-axis direction according to their ion mobilities, which depend on the size, steric structure, electric charge and other properties of the individual ions. Ions with different ion mobilities reach the detector 3 having certain intervals of time. If the electric field within the drift region 5 is uniform, the collision cross-section between an ion and the diffusion gas can be estimated from the drift time required for the ion to pass through the drift region 5.

There is also a device in which ions that have been separated according to their ion mobilities are not directly detected but are subsequently introduced into a mass separator, such as a quadrupole mass filter, which further separates those ions according to their mass-to-charge ratios before the ions are detected. Such a device is known as an ion-mobility spectrometry mass spectrometer (IMS-MS).

In the previously described type of conventional ion mobility spectrometer, either a Bradbury-Nielson gate or Tyndall-Powell gate is typically used as the shutter gate 102 (see Non Patent Literature 1). Figs. 11A-11C are schematic diagrams showing the configuration of these two types of gates.

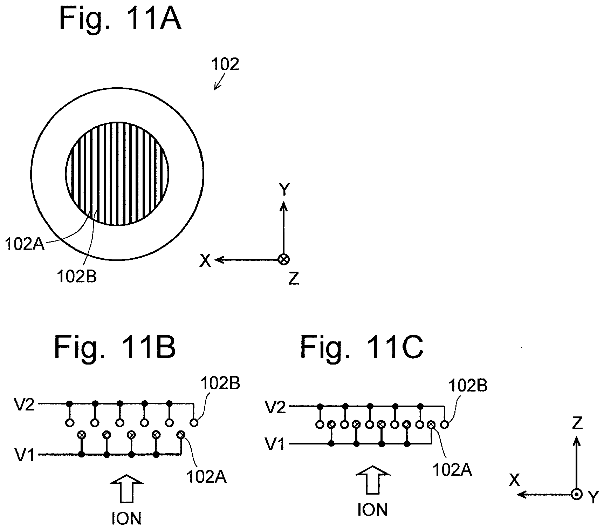

As shown in Fig. 11A, when viewed from their front side, both types of shutter gates have a grid-like structure in which electrically conductive wires 102A and 102B to which different voltages V1 and V2 can be respectively applied are alternately stretched. However, when viewed from above, there is a difference in the arrangement of the conductive wires 102A and 102B: In the Tyndall-Powell gate, as shown in Fig. 11B, there is a predetermined amount of gap in the Z-axis direction between the plane on which the conductive wires 102A to which voltage V1 is applied are located and the plane on which the conductive wires 102B to which voltage V2 is applied are located. By comparison, in the Bradbury-Nielson gate, as shown in Fig. 11C, the conductive wires 102A and 102B are alternately arranged on the same plane.

In any type of shutter gate, in order to assuredly block ions, the spatial intervals between the conductive wires to which different voltages can be applied must be sufficiently narrow. When different voltages are applied to those conductive wires, a Coulomb force occurs between the two wires, causing them to come closer to each other. Therefore, if the conductive wires are long, those wires may be significantly deflected, and the conductive wires to which the different voltages are applied may come in contact with each other and cause a short circuit. Even if the short circuit does not occur, the spatial intervals of the adjacent conductive wires in the opening plane may become significantly uneven and cause a disorder of the electric field in the opening plane, which may cause a problem, such as the leakage of ions during the ion-blocking period. Such problems can be avoided by limiting the length of the conductive wires. However, it causes another problem; i.e. it decreases the opening area of the shutter gate and consequently deteriorates the ion transmission efficiency.

In conventional ion mobility spectrometers, a structure formed by stacking a number of ring electrodes 101 is used to create an accelerating electric field for driving ions within the drift cell 100. This structure normally includes ring electrodes and ring-shaped insulation spacers made of an insulator or similar member alternately stacked. In order to improve the analysis accuracy or resolving power in an ion mobility spectrometer, it is necessary to enhance the homogeneity of the accelerating electric field, i.e. the linearity of the potential gradient on the ion beam axis C. To this end, it is necessary to maximally narrow the gaps between the adjacent ring electrodes 101 as well as maximally increase the length the drift region 5. However, it inevitably increases the cost of the device due to the increase in the number of parts including the ring electrodes and insulation spacers. It also increases the man-hours of the assembling work as well as requires a higher level of skill in the assembling work. These factors also increase the cost of the device.

On the other hand, an ion mobility spectrometer has been commonly known in which a cylindrical glass tube having a resistive coating layer formed on its inner circumferential surface is used as the drift cell to create an electric field having a highly linear potential gradient on the ion beam axis C (see Patent Literature 2 or 3). In this device, an electric field for accelerating ions can be created within the drift cell by applying a predetermined voltage between the two ends of the resistive coating layer on the inner circumferential surface of the drift cell.

In this ion mobility spectrometer, in order to reduce the variation in the resolving power, maximum sensitivity and other performances, it is necessary to improve the uniformity in the thickness of the resistive coating layer on the inner circumferential surface of the cylindrical glass tube. However, it is technically difficult to form such a resistive coating layer having a uniform thickness. Therefore, although the number of parts is small, such a drift cell will be considerably expensive.

For a satisfactory drift of ions within the drift region, it is preferable to maintain the flow of the diffusion gas in a laminar form. With the structure of the drift cell used in the conventional ion mobility spectrometers described so far, it is difficult to maintain the flow of the diffusion gas in a laminar form.

In an ion mobility spectrometer employing an atmospheric pressure ion source, such as an ESI ion source, the difference in gas pressure between the ion source and the inside of the drift cell is small (or almost zero). Therefore, unlike the case of an atmospheric pressure ionization mass spectrometer, it is difficult to utilize a pressure difference to introduce ions generated within the ion source into the next stage. On the contrary, the ions need to be introduced into the drift cell against the flow of the diffusion gas formed within the drift cell in the opposite direction to the moving direction of the ions. Therefore, for example, the ESI spray used in the device described in Patent Literature 1 is arranged in such a manner that the spray flow from the ESI spray will be directed at the entrance opening of the drift cell. Such a configuration certainly helps the generated ions enter the drift cell against the flow of the diffusion gas. However, it also unfavorably allows droplets with insufficiently vaporized solvent to enter the drift cell and easily contaminate the inside of the drift cell. As a result, an unfavorable situation may occur; e.g. electric discharge or the like may easily occur, making the analysis unstable, or a disorder of the electric field may occur, deteriorating the analysis accuracy or resolving power.

CITATION LIST

PATENT LITERATURE

Patent Literature 1: JP 2005-174619 A
Patent Literature 2: US 7081618 B
Patent Literature 3: US 8084732 B

NON PATENT LITERATURE

Non Patent Literature 1: G.A. Eiceman and two other authors, Ion Mobility Spectrometry, Third Edition, CRC Press, issued on December 10, 2013

SUMMARY OF INVENTION

TECHNICAL PROBLEM

The present invention has been developed to solve the previously described problem. Its primary objective is to provide an ion mobility spectrometer in which a large opening area of the shutter gate can be secured while the deflection of the conductive wires forming the shutter gate is reduced to prevent unfavorable situations, such as a short circuit of the conductive wires or disorder of the electric field formed near the opening plane of the shutter gate.

Another objective of the present invention is to provide an ion mobility spectrometer which can secure a high level of analysis accuracy and resolving power while allowing for a cost reduction of the drift cell.

Still another objective of the present invention is to provide an ion mobility spectrometer in which the flow of the diffusion gas within the drift cell can be made closer to a laminar flow to achieve a higher level of analysis accuracy and resolving power.

Yet another objective of the present invention is to provide an ion mobility spectrometer which can perform a high-sensitivity analysis by efficiently sending ions originating from a sample component into the drift cell while reducing the amount of entry of the droplets from an atmospheric pressure ion source into the drift cell and thereby preventing internal contamination of the same cell.

SOLUTION TO PROBLEM

The first aspect of the present invention developed for solving the previously described problem is an ion mobility spectrometer in which ions originating from a sample component are introduced into a drift region and separated from each other according to the mobilities of the ions by being made to move through the drift region, and the separated ions are either detected or further sent to a subsequent analyzing-detecting section, the ion mobility spectrometer including:

a) a housing including an insulating member in which an inner space having a rectangular columnar shape penetrating through the insulating member is formed, where at least a portion of the inner space forms the drift region, and the ratio of the long side to the short side of the rectangular cross section orthogonal to an axis of the inner space is greater than one;
b) a plurality of electrodes arrayed along the axis of the inner space of the housing in order to create an electric field for driving ions within the inner space, where each of the electrodes is shaped like a rectangular loop having a predetermined width in the axial direction, and the ratio of the long side to the short side of a rectangular opening of the electrode is greater than one; and
c) a shutter gate located within the inner space of the housing in order to introduce ions in a pulsed form into the drift region formed by the at least a portion of the inner space of the housing, where the shutter gate includes a frame body shaped like a rectangular loop having a rectangular opening and a plurality of electrically conductive wires stretched parallel to the short side of the rectangular opening, with the ratio of the long side to the short side of the rectangular opening being greater than one.

The second aspect of the present invention developed for solving the previously described problem is an ion mobility spectrometer in which ions originating from a sample component are introduced into a drift region and separated from each other according to the mobilities of the ions by being made to move through the drift region, and the separated ions are either detected or further sent to a subsequent analyzing-detecting section, the ion mobility spectrometer including:

a) a housing including an insulating member in which an inner space having a rectangular columnar shape penetrating through the insulating member is formed, where at least a portion of the inner space forms the drift region, and the ratio of the long side to the short side of the rectangular cross section orthogonal to an axis of the inner space is greater than one;
b) a resistive layer formed at least on the surface of two mutually opposing faces containing the two long sides of the rectangular cross section of the inner space having a rectangular columnar shape penetrating through the insulating member, for creating an electric field for driving ions within the inner space of the housing; and
c) a shutter gate located within the inner space of the housing in order to introduce ions in a pulsed form into the drift region formed by the at least a portion of the inner space of the housing, where the shutter gate includes a frame body shaped like a rectangular loop having a rectangular opening and a plurality of electrically conductive wires stretched parallel to the short side of the rectangular opening, with the ratio of the long side to the short side of the rectangular opening being greater than one.

The first and second aspects of the present invention differ from each other in the configuration of the electrode for creating the electric field for making ions move into the inner space of the housing. However, the configurations of the housing itself and the shutter gate are the same. That is to say, in the ion mobility spectrometer according to the present invention, the drift region within which ions are driven by the electric field has a substantially rectangular cross-sectional shape and not a circular shape which has been conventionally and typically used. In accordance with the cross-sectional shape of the drift region, the shutter gate also has a rectangular opening whose ratio of the long side to the short side (which is hereinafter appropriately called the "aspect ratio") is greater than one, with a number of electrically conductive wires stretched parallel to the short side of the rectangular opening. The shutter gate may be either of the Bradbury-Nielson and Tyndall-Powell gates.

The previously described configuration of the shutter gate allows the conductive wires to be shorter, for example, than in a configuration with the conductive wires stretched over a square opening having an aspect ratio of one, under the condition that the opening area is the same. The ion transmittance is basically the same as long as the opening area of the shutter gate is the same. Meanwhile, shorter conductive wires undergo smaller deflections due to the Coulomb force caused by application of voltages. Therefore, the situation in which adjacent conductive wires with different voltages applied come in contact with each other and cause a short circuit can be prevented. Furthermore, since the fluctuation of the spatial intervals of the adjacent conductive wires also becomes smaller, the disorder of the electric field created by the voltages applied to the conductive wires is also reduced. Thus, the deterioration of the ion transmittance can be avoided.

As noted earlier, in the ion mobility spectrometer according to the present invention, the drift region within which ions are driven by the electric field has a substantially rectangular cross-sectional shape and not a circular shape which has conventionally and typically been used. Normally, a flow of diffusion gas is formed within the drift region in the opposite direction to the moving direction of the ions, i.e. from one open-ended face of the inner space which functions as the ion exit opening in the housing toward the other open-ended face which functions as the ion entrance opening. It is commonly known that a gas flow in a pipe line more easily become a laminar flow as the Reynolds number becomes lower. The Reynolds number has a lower value for a pipe line having a rectangular or square cross section than for a pipe line having a circular cross section, provided that the pipe lines have the same cross-sectional area. Accordingly, in the ion mobility spectrometer according to the present invention, the flow of the diffusion gas more easily becomes a laminar flow than in the conventional device in which the drift region has a circular cross section. Accordingly, the ions moving within the drift region are likely to travel parallel to the axis, which is the ideal direction for separating the ions according to their ion mobilities. Thus, a high level of analysis accuracy and resolving power can be obtained.

In the ion mobility spectrometer according to the first aspect of the present invention, the ratio of the long side to the short side of the housing, the ratio of the long side to the short side of the rectangular opening of the electrodes, and the ratio of the long side to the short side of the rectangular opening of the shutter gate, are all greater than one. Due to a reason (which will be described later), each of these three ratios may preferably be equal to or greater than 1.5. Similarly, in the ion mobility spectrometer according to the second aspect of the present invention, the ratio of the long side to the short side of the housing and the ratio of the long side to the short side of the rectangular opening of the shutter gate are both greater than one. Each of these two ratios may preferably be equal to or greater than 1.5, as with the first aspect of the present invention.

As a preferable configuration of the ion mobility spectrometer according to the present invention, the housing may have a rectangular parallelepiped outer shape and be made of two members having a shape obtained by cutting the housing at a plane containing a straight line extending in the direction of the axis of the inner space.

For example, the two members forming the housing may have a shape obtained by cutting the housing at a plane which contains the axis of the inner space and is parallel to the long side of the rectangular cross section of the inner space. In this case, each of the two members has a concave channel with a substantially rectangular cross section whose depth is approximately equal to one half of the short side of the rectangular cross section of the inner space and whose bottom width is equal to the long side of the same cross section. The housing is formed by bonding the two members together, with their respective channels facing each other. According to this configuration, the wall surfaces forming the inner space of the housing, except for the two open-ended faces, are not closed surfaces surrounding the axis.

Therefore, if such a configuration is adopted in the ion mobility spectrometer according to the first aspect of the present invention, the housing with the electrodes and the shutter gate arranged within its inner space can be formed by fitting the electrodes and the shutter gate at predetermined positions in the channel of one of the members which form the housing, placing the other member over those fitted elements, and bonding the two members together. Shallow grooves for the fitting of the electrodes and the shutter gate may be formed beforehand on the inside of the channels which will eventually form the inner space. This enables a secure fixation of the electrodes and the shutter gate.

Such a configuration contributes to the cost reduction since it requires fewer parts and fewer man-hours for the assembling work than in the case of using the conventional structure in which ring electrodes and ring-shaped insulation spacers are alternately stacked.

If the aforementioned configuration is adopted in the ion mobility spectrometer according to the second aspect of the present invention, it becomes easy to form the resistive layer and enhance the uniformity in the thickness of the resistive layer. This enhances the homogeneity of the electric field for driving ions and thereby improves the analysis accuracy and the resolving power.

In the ion mobility spectrometer according to the second aspect of the present invention, the resistive layer only needs to be formed at least on the surface of the two mutually opposing faces containing the two long sides of the rectangular cross section of the inner space having a rectangular columnar shape penetrating through the insulating member. It is preferable that the resistive layer be additionally formed on the two mutually opposing faces containing the two short sides of the rectangular cross section, or in other words, that the resistive layer be formed on all of the four wall surfaces facing the inner space.

As already described, in the ion mobility spectrometer according to the present invention, the drift region has a flat rectangular cross section whose aspect ratio is greater than one. Therefore, for example, if ions are introduced into a small area around the central axis of the region, the drift region which has a large width in the direction of the long side of the rectangular cross section cannot be fully utilized. Accordingly, as a preferable mode of the present invention, the ion mobility spectrometer may further include an ion source located on the outside of one of the open-ended faces of the inner space of the housing, for ionizing a sample component at a plurality of locations along the extending direction of the long side of the rectangular open-ended face.

For example, the ion source may include:

a sample spray for spraying a sample solution in a direction which is substantially orthogonal to the central axis of the open-ended face and is parallel to the extending direction of the long side of the open-ended face; and

a plurality of ionization promoters located along the extending direction of the long side of the open-ended face, for ionizing a sample component in a spray flow from the sample spray.

In the case of performing atmospheric pressure chemical ionization, the ionization promoters are discharge electrodes for generating buffer ions for atmospheric pressure chemical ionization. In the case of performing atmospheric pressure photoionization, the ionization promoters are photo-irradiators for irradiating a sample component with light for atmospheric pressure photoionization.

In the case of performing electrospray ionization, the ion source may include a plurality of electrostatic sprays located along the extending direction of the long side of the open-ended face, where each of the electrostatic sprays is arranged to spray an electrically charged sample solution in a direction which is substantially orthogonal to the central axis of the open-ended face and is parallel to the extending direction of the short side of the rectangular open-ended face.

In any of these ion sources, ions originating from a sample component are generated at a plurality of areas located along the extending direction of the long side of the open-ended face which functions as the ion entrance opening. Therefore, a greater amount of ions can be sent into the inner space of the housing, i.e. into the drift region. This improves the analysis sensitivity as well as the reproducibility of the analysis. Since the spray flow of the sample solution does not directly enter the open-ended face forming the ion entrance opening, the wall surfaces facing the inner space of the housing will not be seriously contaminated due to the adhesion of the sample droplets. This prevents unwanted electric discharge caused by such contamination as well as suppresses the deterioration in analysis accuracy or resolving power due to a disorder of the electric field.

ADVANTAGEOUS EFFECTS OF THE INVENTION

In the ion mobility spectrometer according to the present invention, a high level of ion transmission efficiency can be achieved by securing a large opening area of the shutter gate, while the deflection of the conductive wires in the shutter gate can be suppressed by decreasing the length of the conductive wires. Thus, the conductive wires are prevented from coming in contact with each other and causing a short circuit. Furthermore, since the electric field created by the voltages applied to the conductive wires will not be seriously disordered, the leakage of ions can be prevented in a situation where ions need to be blocked. Consequently, a high level of analysis accuracy and resolving power can be achieved.

BRIEF DESCRIPTION OF DRAWINGS

Fig. 1 is a perspective configuration diagram of a drift cell used in an ion mobility spectrometer as the first embodiment of the present invention.
Fig. 2 is a configuration diagram showing the main components of the ion mobility spectrometer according to the first embodiment.
Fig. 3 is a plan view of one of the electrodes for creating an accelerating electric field in the ion mobility spectrometer according to the first embodiment.
Fig. 4 is a perspective configuration diagram of a shutter gate in the ion mobility spectrometer according to the first embodiment.
Fig. 5 is a schematic configuration diagram of an ion source in the ion mobility spectrometer according to the first embodiment.
Fig. 6A is a circuit diagram of a measurement system for measuring the relationship between the position of a plurality of discharge electrodes used in the ion source of the ion mobility spectrometer according to the first embodiment and the total emission current, and Fig. 6B is a measured result.
Fig. 7 is a schematic configuration diagram of another ion source.
Fig. 8 is a perspective configuration diagram of a drift cell used in an ion mobility spectrometer as the second embodiment of the present invention.
Fig. 9 is a configuration diagram showing the main components of the ion mobility spectrometer according to the second embodiment.
Fig. 10 is a configuration diagram showing the main components of a conventional ion mobility spectrometer.
Figs. 11A-11C are schematic configuration diagrams of a Bradbury-Nielson gate and a Tyndall-Powell gate used in conventional ion mobility spectrometers.

DESCRIPTION OF EMBODIMENTS

[First Embodiment]

An ion mobility spectrometer as the first embodiment of the present invention is hereinafter described with reference to the attached drawings.

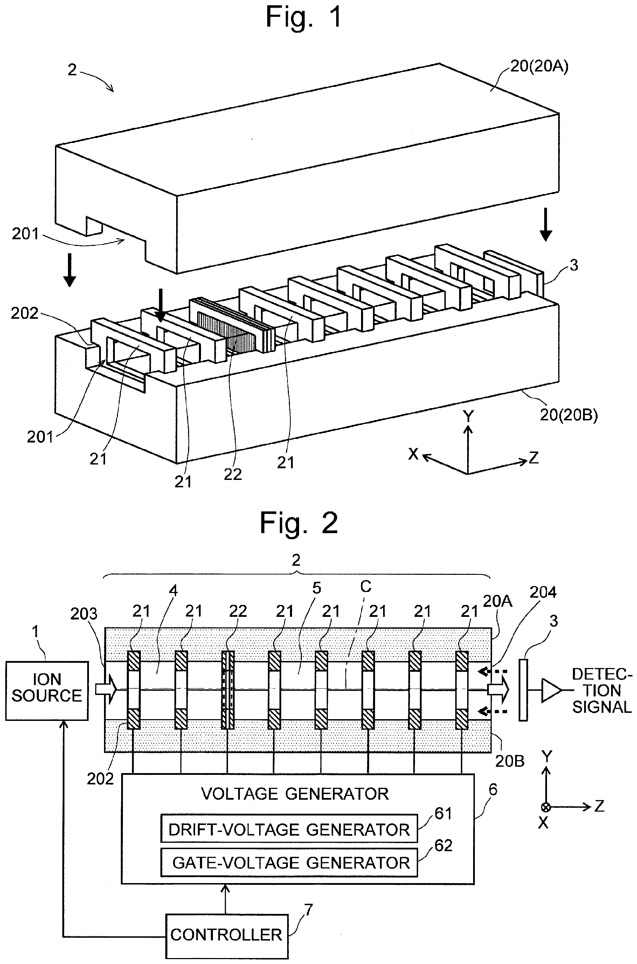

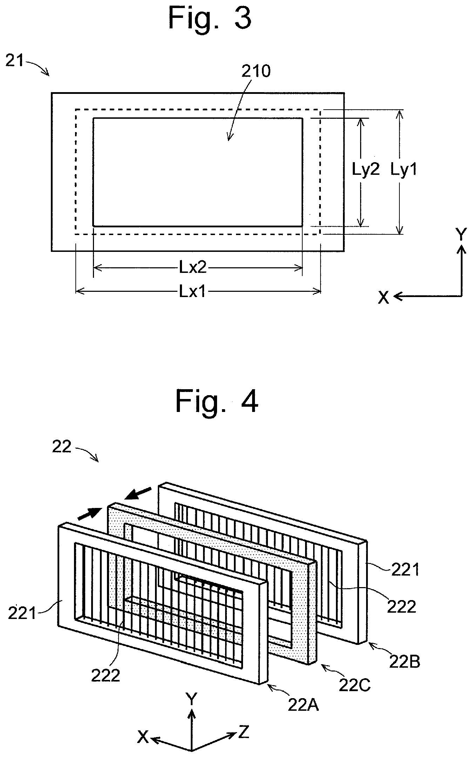

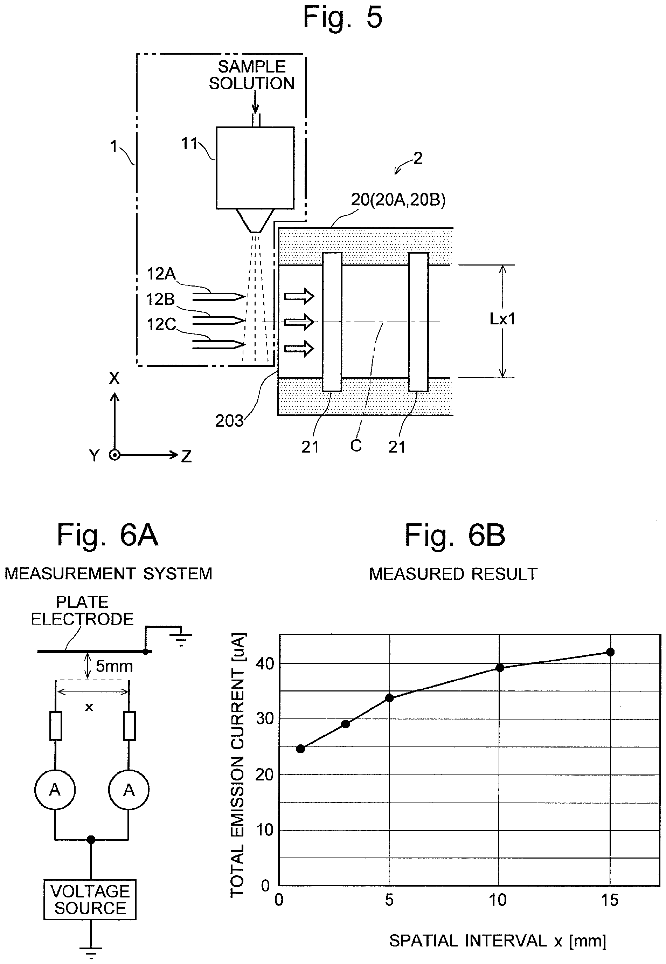

Fig. 2 is a configuration diagram showing the main components of the ion mobility spectrometer according to the first embodiment. Fig. 1 is a perspective configuration diagram of the drift cell used in the ion mobility spectrometer according to the first embodiment. Fig. 3 is a plan view of one of the electrodes for creating an accelerating electric field in the ion mobility spectrometer according to the first embodiment. Fig. 4 is a perspective view of a shutter gate in the ion mobility spectrometer according to the first embodiment. Fig. 5 is a schematic configuration diagram of an ion source in the ion mobility spectrometer according to the first embodiment.

The ion mobility spectrometer according to the present embodiment includes a drift cell 2 for forming a desolvation region 4 and a drift region 5 inside. This cell includes: a housing 20 made of an insulator having a substantially flat rectangular parallelepiped outer shape, with an inner space having a substantially rectangular columnar shape penetrating through the insulator; a plurality of electrodes 21 each of which is shaped like a rectangular loop having a predetermined thickness; and a shutter gate 22 including a frame body shaped like a rectangular loop, with electrically conductive wires stretched over the frame body. For convenience, it is hereinafter assumed that the housing 20 having a substantially flat rectangular parallelepiped shape has its sides extending in the X, Y and Z-axis directions which are orthogonal to each other, as shown in Fig. 1 and other figures. The inner space having a substantially rectangular columnar shape penetrating through the housing extends in the Z-axis direction. In the present case, the central axis of the inner space coincides with the ion beam axis C.

The housing 20 is composed of two members having a shape obtained by cutting the housing 20 at the X-Z plane containing the central axis of the inner space, i.e. an upper housing member 20A and a lower housing member 20B. A channel 201 having a substantially rectangular cross section with a depth (height) of Ly1/2 in the Y-axis direction and a width of Lx1 in the X-axis direction is formed along the Z-axis direction in each of the upper and lower housing members 20A and 20B. The aforementioned inner space having a substantially rectangular cross section is formed by bonding the upper and lower housing members 20A and 20B with their respective channels 201 facing each other. Accordingly, the substantially rectangular cross section orthogonal to the central axis of the inner space has a long-side length of Lx1 and a short-side length Ly1. The ratio between the two sides (aspect ratio) Lx1/Ly1 has a predetermined value which is greater than one.

The electrodes 21 are components which replace the ring electrodes in the conventional device shown in Fig. 10. As shown in Fig. 3, they have a rectangular opening 210 with a long-side length of Lx2 in the X-axis direction and a short-side length of Ly2 in the Y-axis direction. The ratio between the two sides (aspect ratio) of this rectangular opening 210, Lx2/Ly2, also has a predetermined value which is greater than one.

The shutter gate 22 is a Tyndall-Powell gate as shown in Fig. 11B. As shown in Fig. 4, it is a structure including a spacer 22C shaped like a rectangular loop made of an insulator, ceramic insulator, for example, sandwiched between two grid electrodes 22A and 22B. Each of the grid electrodes 22A and 22B includes a frame body 221 shaped like a rectangular loop made of an insulator, ceramic insulator, for example, having a rectangular opening, over which a number of electrically conductive wires 222 extending in the Y-axis direction are stretched at spatial intervals of T. The position of the conductive wires 222 in the grid electrode 22A is displaced from that of the conductive wires 222 in the grid electrode 22B by T/2 in the X-axis direction. Accordingly, when the opening plane of the shutter gate 22 is viewed from the front side, the conductive wires 222 in the grid electrodes 22A and 22B are alternately arranged at special intervals of T/2 in the X-axis direction. The long-side and short-side lengths of the rectangular opening of the shutter gate 22 in the present embodiment are respectively the same as those of the rectangular opening 210 of the electrode 21. However, they do not always need to be the same. The ratio of the long-side length to the short-side length of the rectangular opening of the shutter gate 22 is also greater than one.

The upper and lower housing members 20A and 20B each have shallow grooves 202 for the fitting of the electrodes 21 and the shutter gate 22 at predetermined positions on the inside of the channel 201 having a substantially rectangular cross section. The outside dimensions of the electrodes 21 and the shutter gate 22 are made to be slightly larger than the cross-sectional dimensions of the inner space of the housing 20 so that they fit in the grooves 202. Therefore, as shown in Fig. 1, by fitting the electrodes 21 and the shutter gate 22 into the corresponding grooves 202 formed in the channel 201 having a substantially rectangular cross section of the lower housing member 20B, and then placing the upper housing member 20A over the fitted elements, the electrodes 21 and the shutter gate 22 can be assuredly fixed at their respective positions within the inner space of the housing 20.

Thus, it is comparatively easy to assemble the drift cell 2 of the ion mobility spectrometer in the present embodiment. The man-hours for the assembling work are considerably fewer than in the case of a conventional device as shown in Fig. 10. The number of members forming the drift cell 2 is also fewer, which is also advantageous in terms of cost.

In the ion mobility spectrometer according to the present embodiment, one of the two open-ended faces of the inner space of the housing 20 (in Figs. 1 and 2, the open-ended face on the left side) is the entrance opening 203 from which ions are to be introduced, while the other open-ended face (in Figs. 1 and 2, the open-ended face on the right side) is the exit opening 204 from which the separated ions exit. As shown in Fig. 2, the space between the entrance opening 203 and the shutter gate 22 in the inner space of the housing 20 functions as the desolvation region 4, while the space between the shutter gate 22 and the exit opening 204 functions as the drift region 5. An ion source 1 is located on the outside of the entrance opening 203. Ions generated from a sample component in the ion source 1 are introduced through the entrance opening 203 into the desolvation region 4.

On the other hand, a detector 3 is located on the outside of the exit opening 204. Ions which have exited from the exit opening 204 arrive at the detector 3 and are detected.

A voltage generator 6, which is controlled by a controller 7, includes a drift-voltage generator 61 and a gate-voltage generator 62. The voltage generator 6 applies a predetermined voltage to each electrode 21 as well as the two grid electrodes 22A and 22B forming the shutter gate 22. Due to the direct voltages applied to the electrodes 21, an electric field for accelerating ions which have entered the inner space through the entrance opening 203 is created within the desolvation region 4 and the drift region 5. The shutter gate 22 is driven to be opened and closed so as to temporarily block the incoming ions and then allow the ions to pass through and enter the drift region 5 for a short period of time at a predetermined timing. Meanwhile, a gentle flow of diffusion gas is formed from the exit opening 204 toward the entrance opening 203 by a gas supply mechanism (not shown).

One of the features of the ion mobility spectrometer according to the present embodiment is, as described earlier, that the opening of the shutter gate 22 for introducing ions into the drift region 5 has a rectangular shape whose aspect ratio is greater than one, and the conductive wires 222 are stretched over this opening in such a manner as to extend parallel to the short side of the opening. An advantage of such a configuration is as follows:

As one example, consider a comparison between a shutter gate having a square opening with a side length of Lc in both X and Y-axis directions and a shutter gate having a rectangular opening with a short-side length of La and a long-side length of Lb=2La, i.e. with the long side two times as long as the short side. To equalize ion transmission conditions, the two shutter gates are given the same opening area. Specifically, if Lc=20 mm in the square shutter gate, then La=14 mm and Lb=28 mm in the rectangular gate.

Suppose that each conductive wire stretched over the opening of each shutter gate is a simple beam with a uniformly distributed load. It has been commonly known the maximum deflection $\delta_{MAX}$ of this wire is expressed by the following equation (1):

$$\delta_{MAX} = (5 \cdot w \cdot L^4) / (384 \cdot E \cdot I) \quad \ldots(1)$$

where w is the uniformly distributed load, L is the length of the beam (wire), E is the Young's modulus, and I is the second moment of area.

From equation (1), it can be understood that the longer the beam is, the greater the deflection becomes, provided that the beam has the same shape and is made of the same material. A calculation using the aforementioned sizes of the openings demonstrates that the deflection of the wires in the square shutter gate is approximately four times as large as that of the wires in the rectangular shutter gate. In other words, the deflection of the conductive wires in a rectangular shutter gate as used in the previous embodiment is dramatically smaller than that of the wires in a square shutter gate having the same opening area. Therefore, it is possible to prevent the adjacent conductive wires having a voltage difference from coming in contact with each other. Additionally, it is normally impossible that all wires be uniformly deflected due to the influences of the electric field or the flow of diffusion gas. In the case where some of those wires are significantly deflected while others undergo only small deflections, a disorder of the electric field may occur at the timing when the electric field is switched to allow ions to pass through, causing a deterioration of the ion transmittance. By comparison, in the case of the rectangular shutter gate, since the amount of deflection of the wires is small in the first place, only an insignificant disorder of the electric field occurs at the moment of allowing the passage of ions or blocking ions. Accordingly, the ion transmittance in the process of allowing the passage of ions is improved, while the leakage of ions in the process of blocking the ions is prevented. Consequently, both analysis sensitivity and resolving power will be improved.

In the ion mobility spectrometer according to the present invention, since the desolvation region 4 and the drift region 5 through which the diffusion gas is passed have a substantially rectangular cross section, the flow of diffusion gas becomes a laminar flow more easily than in the case where the channel of the diffusion gas has a substantially circular cross section as in the conventional device shown in Fig. 10. This point will be hereinafter described.

The Reynolds number $R_e$, which is an index value related to the flow of a fluid in a pipe, is generally expressed by the following equation (2):

$$R_e = Q \cdot D_H / (v \cdot A) \quad \ldots(2)$$

where Q is the volume flow rate, $D_H$ is the hydraulic diameter, v is the coefficient of kinematic viscosity, and A is the sectional area of the pipe. For a pipe having a rectangular cross section, the hydraulic diameter is expressed by the following equation (3):

$$D_H = 4 \cdot A / P \quad \ldots(3)$$

where P is the wetted perimeter (the length over which the fluid is in contact with the surrounding walls and bottom in a cross section of the pipe).

For example, consider a pipe having a square cross section with one-side length a (prismatic pipe) and a pipe having a circular cross section with radius r (cylindrical pipe). If the two pipes have the same cross-sectional area, $r = a/\sqrt{\pi}$. The hydraulic diameter of the cylindrical pipe is $D_H = 2a/\sqrt{\pi},$ and that of the prismatic pipe is $D_H$=a. Accordingly, the Reynolds number for the cylindrical pipe is larger than the one for the prismatic pipe by a factor of $2/\sqrt{\pi} \approx 1.13,$ provided that the two pipes have the same cross-sectional area. In the case of a prismatic pipe having a rectangular cross section with short-side length a and long-side length b=2a, the Reynolds number for the cylindrical pipe is approximately 1.2 times the one for the prismatic pipe, provided that the two pipes have the same cross-sectional area. These examples demonstrate that the Reynolds number for a prismatic pipe becomes lower as the aspect ratio becomes higher, i.e. as the pipe becomes flatter.

As is commonly known, the lower the Reynolds number is, the easier it becomes to maintain the laminar flow. Maintaining the laminar flow of the diffusion gas within the drift region 5 has the effect of preventing the trajectories of the ions from being disordered by a turbulent flow of the gas. Therefore, the ions introduced into the drift region 5 will not be significantly diffused in the X-Y plane; their trajectories will be determined by the two factors, i.e. the effect of the acceleration by the electric field and the collision with the diffusion gas. Thus, with the ion mobility spectrometer according to the present embodiment, it is possible to expect that the analysis sensitivity and resolving power will be higher than with a conventional device.

The previously described effect can be obtained by giving a value greater than one to each of the aspect ratios of the opening of the shutter gate 22, rectangular opening 210 of the electrodes 21, and cross section of the inner space of the housing 20. It is preferable those aspect ratios each have a value equal to or greater than 1.5. Under this condition, the deflection of the conductive wires stretched over the opening of the shutter gate 22 can be reduced to be equal to or smaller than one half of the deflection in a conventional device, so that the adjacent conductive wires can be assuredly prevented from coming in contact with each other even if the parameter w, L or E in equation (1) changes due to a variation related to the production process, difference in analysis conditions or other factors. The Reynolds number will also be sufficiently decreased, whereby a significant effect of improving the ion transmittance will be obtained.

The configuration of the ion source 1 in the ion mobility spectrometer according to the present invention is hereinafter described. The ion source 1 is an ion source employing the atmospheric pressure chemical ionization (APCI) method. As shown in Fig. 5, the ion source 1 includes: a spray 11 for spraying a sample solution containing a sample component in a direction which is orthogonal to the central axis of the entrance opening 203 (which coincides with the ion beam axis C in the present example) and is also parallel to the longitudinal direction of the entrance opening 203 (X-axis direction); and a plurality of (in the present example, three) needle-like discharge electrodes 12A, 12B and 12C, arranged along the X-axis direction, for generating corona discharge. In the case where a liquid chromatograph (LC) is connected in the previous stage of the ion mobility spectrometer according to the present embodiment, a sample solution eluted from the column of the LC is continuously supplied to the spray 11. The spray 11 produces a spray flow of the sample solution, for example, with the help of nebulizer gas. Since the spraying direction is substantially parallel to the opening plane of the entrance opening 203, the spray flow will not directly enter the entrance opening 203. Thus, serious contamination of the wall surfaces facing the inner space of the housing 20 is prevented.

A high voltage is simultaneously applied from a high-voltage source (not shown) to the plurality of discharge electrodes 12A, 12B and 12C, whereby corona discharge is generated at the tip of each of the discharge electrodes 12A, 12B and 12C. The molecules of the buffer gas, such as the nebulizer gas, are ionized by this corona discharge. The resulting buffer ions react with the sample components released from the sample droplets in the spray flow. Thus, ions originating from the sample component are generated. Due to the effect of an electric field which is spread from the entrance opening 203 to the outside, the generated ions are attracted toward the entrance opening 203 and eventually enter the desolvation region 4 through the entrance opening 203. Since the aforementioned buffer ions are generated around the tip of each of the discharge electrodes 12A, 12B and 12C, i.e. at a plurality of areas located along the X-axis direction, the ions originating from the sample component are also generated over a wide range along the X-axis direction. Since this direction coincides with the width direction of the entrance opening 203, the ions generated from the sample component can be efficiently introduced into this opening and sent into the desolvation region 4.

Fig. 6A is a circuit diagram of a measurement system used for measuring a relationship between the position (spatial interval) of two discharge electrodes and the total emission current, and Fig. 6B is a graph showing the measured result.

The amount of generation of the buffer ions increases with an increase in the total emission current, while the total emission current changes depending on the spatial interval of the two discharge electrodes, as can be understood from the result of Fig. 6B. Accordingly, the number and spatial interval of the discharge electrodes should be appropriately determined by experiment according to the width of the entrance opening 203.

As described earlier, with the ion source 1 in the ion mobility spectrometer according to the present embodiment, it is possible to improve the sensitivity and reproducibility of an analysis by sending a greater amount of ions originating from a sample component through the desolvation region 4 into the drift region 5, while suppressing the contamination of the wall surfaces and other areas facing the inner space of the housing 20 by reducing the amount of spray flow entering the entrance opening 203 for introducing ions. In particular, ions can be sent into the desolvation region 4 over a wide range along the direction of the long side of the desolvation region 4 and the drift region 5 both of which have a substantially rectangular cross section, i.e. along the spread direction of the opening. Therefore, the desolvation region 4 and the drift region 5 having a substantially rectangular cross section can be efficiently used for the separation of the ions according to their mobilities.

[Second Embodiment]

An ion mobility spectrometer as the second embodiment of the present invention is hereinafter described with reference to the attached drawings.

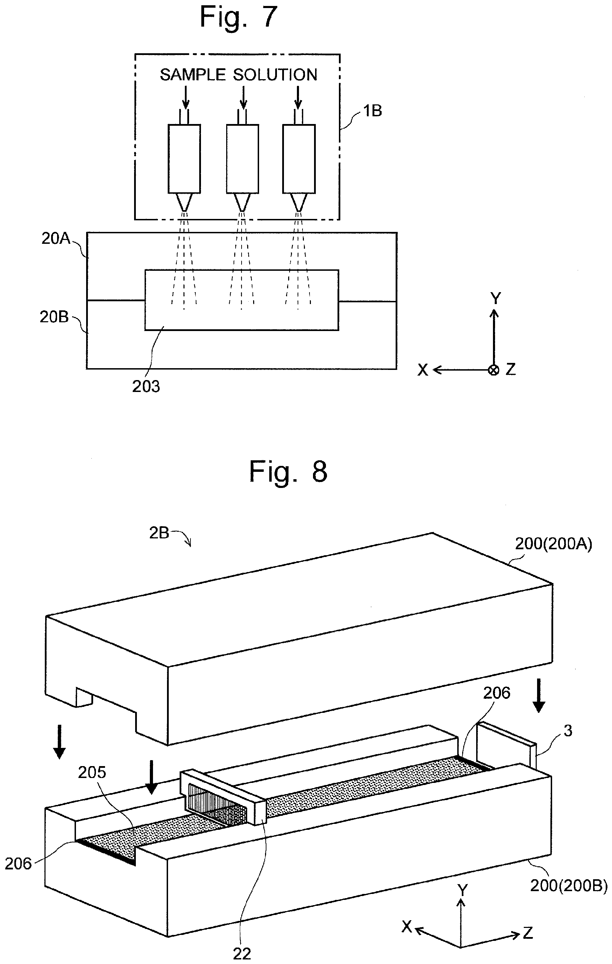

Fig. 9 is a configuration diagram showing the main components of the ion mobility spectrometer according to the second embodiment. Fig. 8 is a perspective configuration diagram of the drift cell 2B used in the ion mobility spectrometer according to the second embodiment.
In the ion mobility spectrometer according to the second embodiment, in place of the electrodes 21 used for creating the electric field to make ions drift in the first embodiment, a resistive film layer 205 having a uniform thickness is formed on the bottom surface of the channel 201 having a substantially rectangular cross section formed in each of the upper and lower housing members 200A and 200B which form the housing 200. The two ends of the resistive film layer 205 are respectively located in the entrance opening 203 and the exit opening 204. An electrode layer 206 made of metal or a similar electric conductor is formed at both ends of the resistive film layer 205 in such a manner as to be in contact with this layer. The aspect ratio of the substantially rectangular cross section of the inner space of the housing 200 has a predetermined value greater than one, as with the first embodiment (in a strict sense, the aspect ratio of the inner space slightly changes due to the thickness of the resistive film layer 205, although this thickness is negligibly small). The resistive material for the resistive film layer 205 is not specifically limited; it may be any material which has an appropriate specific resistance. The method for forming the resistive film layer 205 on the two housing members 200A and 200B is not specifically limited.
The shutter gate 22 is configured in a similar manner to the first embodiment and is similarly fitted in the channel 201 having a substantially rectangular cross section. As shown in Fig. 9, when the upper and lower housing members 200A and 200B are bonded together, the resistive film layer 205 continuously extend from the entrance opening 203 to the exit opening 204 on both upper and lower surfaces facing the inner space of the housing 200. The voltage generator 6 applies a predetermined voltage between the pair of electrode layers 206 located at both ends of the resistive film layer 205. As a result, an accelerating electric field having a linear potential gradient is created within the inner space of the housing 200 along the central axis of the same space. Due to the effect of the accelerating electric field, ions move within the desolvation region 4 and the drift region 5.
It is technically difficult to form a resistive film layer having a uniform thickness on the inner surface of a cylindrical pipe, as in the devices described in Patent Literature 2 or 3. By comparison, the device according to the present embodiment merely requires forming a resistive film layer with a uniform thickness on the flat bottom surface of a wide channel. This is comparatively easy to achieve. It is also easy to secure the uniformity in the thickness of the resistive film layer. Accordingly, the drift cell 2B can be created at a comparatively low cost, which is advantageous for reducing the cost of the entire device.
In the example shown in Figs. 8 and 9, the resistive film layer is formed only on the bottom surface of the trench 201 having a substantially rectangular cross section; no resistive film layer is formed on the inner side surfaces of the trench 201, i.e. on the surfaces which extend parallel to the Y-Z plane in the inner space of the housing 20. Naturally, the resistive film layer may also be formed on these surfaces. The addition of such a resistive film layer is disadvantageous in terms of cost and yet is beneficial for enhancing the homogeneity of the electric field.
For the same reason as described in the first embodiment, the aspect ratio of the opening of the shutter gate 22 and that of the cross section of the inner space of the housing 200 may preferably have a value equal to or greater than 1.5.
In the first embodiment, an ion source employing the APCI method is used as the ion source 1. An ion source employing a different atmospheric pressure ionization method may also be used. For example, in the case of using an ion source employing the atmospheric pressure photoionization (APPI) method, a plurality of photo-irradiators for irradiating the spray flow ejected from the spray 11 with a predetermined wavelength of light can be provided in place of the discharge electrodes 12A-12C in the configuration shown in Fig. 5.
In the case of using an ion source employing the ESI method, a plurality of ESI sprays are arranged along the X-axis direction, as shown in Fig. 7, with each spray directed to spray electrically charged sample droplets in the direction which is orthogonal to the central axis of the entrance opening 203 and is parallel to the short side of the entrance opening 203 (Y-axis direction). In this case, ions originating from a sample component are mainly generated within the spray flow from each ESI spray as well as around the spray flow. Therefore, as with the configuration shown in Fig. 5, ions are generated at a plurality of different positions located along the long side of the entrance opening 203. As a result, a greater amount of ions can be introduced through the entrance opening 203 into the desolvation region 4, and a high level of analysis sensitivity and reproducibility can be achieved.

It is evident that a Bradbury-Nielson gate, in which all conductive wires are arrayed on the same plane, may be used as the shutter gate 22 in place of the Tyndall-Powell gate used in the previous embodiments.

The housing 20 (200) forming the drift cell 2 (2B) in the previous embodiments is composed of the upper housing member 20A (200A) and the lower housing member 20B (200B) which are substantially identical in shape. As another example, the upper housing member 20A (200A) may be a simple cover-like member in which the trench having a substantially rectangular cross section is not formed. Neither of the upper and lower housing members 20A (200A) and 20B (200B) needs to be an integrally formed member; for example, each member may be formed by a plurality of parts bonded together. In particular, in the case of forming the resistive film layer on a portion of the surface of the housing member as in the second embodiment, it will be convenient to form the resistive film layer on a simple flat part, since this facilitates the formation of a resistive film layer with a uniform thickness.

The previous embodiments are mere examples of the present invention. Other than the previous embodiments and their variations, any change, modification or addition appropriately made within the spirit of the present invention will naturally fall within the scope of claims of the present application.

REFERENCE SIGNS LIST

1... Ion Source
11... Spray
12A, 12B, 12C... Discharge Electrode
2, 2B... Drift Cell
20, 200... Housing
20A, 200A... Upper Housing Member
20B, 200B... Lower Housing Member
201... Trench Having Substantially Rectangular Cross Section
202... Groove
203... Entrance Opening
204... Exit Opening
205... Resistive Film Layer
206... Electrode Layer
21... Electrode
210... Rectangular Opening
22... Shutter Gate
22A, 22B... Grid Electrode
22C... Spacer
221... Frame Body
222... Conductive Wire
3... Detector
4... Desolvation Region
5... Drift Region
6... Voltage Generator
61... Drift-Voltage Generator
62... Gate-Voltage Generator
7... Controller
C... Ion Beam Axis

Claims

1. An ion mobility spectrometer in which ions originating from a sample component are introduced into a drift region and separated from each other according to mobilities of the ions by being made to move through the drift region, and the separated ions are either detected or further sent to a subsequent analyzing-detecting section, the ion mobility spectrometer comprising:

a) a housing including an insulating member in which an inner space having a rectangular columnar shape penetrating through the insulating member is formed, where at least a portion of the inner space forms the drift region, and a ratio of a long side to a short side of a rectangular cross section orthogonal to an axis of the inner space is greater than one;
b) a plurality of electrodes arrayed along the axis of the inner space of the housing in order to create an electric field for driving ions within the inner space, where each of the electrodes is shaped like a rectangular loop having a predetermined width in the axial direction, and a ratio of a long side to a short side of a rectangular opening of the electrode is greater than one; and
c) a shutter gate located within the inner space of the housing in order to introduce ions in a pulsed form into the drift region formed by the at least a portion of the inner space of the housing, where the shutter gate includes a frame body shaped like a rectangular loop having a rectangular opening and a plurality of electrically conductive wires stretched parallel to a short side of the rectangular opening, with a ratio of a long side to a short side of the rectangular opening being greater than one.

2. The ion mobility spectrometer according to claim 1, wherein:
the ratio of the long side to the short side of the housing, the ratio of the long side to the short side of the rectangular opening of the electrodes, and the ratio of the long side to the short side of the rectangular opening of the shutter gate, are all equal to or greater than 1.5.

3. An ion mobility spectrometer in which ions originating from a sample component are introduced into a drift region and separated from each other according to mobilities of the ions by being made to move through the drift region, and the separated ions are either detected or further sent to a subsequent analyzing-detecting section, the ion mobility spectrometer comprising:

a) a housing including an insulating member in which an inner space having a rectangular columnar shape penetrating through the insulating member is formed, where at least a portion of the inner space forms the drift region, and a ratio of a long side to a short side of a rectangular cross section orthogonal to an axis of the inner space is greater than one;

b) a resistive layer formed at least on a surface of two mutually opposing faces containing two long sides of the rectangular cross section of the inner space having a rectangular columnar shape penetrating through the insulating member, for creating an electric field for driving ions within the inner space of the housing; and

c) a shutter gate located within the inner space of the housing in order to introduce ions in a pulsed form into the drift region formed by the at least a portion of the inner space of the housing, where the shutter gate includes a frame body shaped like a rectangular loop having a rectangular opening and a plurality of electrically conductive wires stretched parallel to a short side of the rectangular opening, with a ratio of a long side to a short side of the rectangular opening being greater than one.

4. The ion mobility spectrometer according to claim 3, wherein:
the ratio of the long side to the short side of the housing and the ratio of the long side to the short side of the rectangular opening of the shutter gate are both equal to or greater than 1.5.

5. The ion mobility spectrometer according to one of claims 1-4, wherein:
the housing has a rectangular parallelepiped outer shape and is made of two members having a shape obtained by cutting the housing at a plane containing a straight line extending in a direction of the axis of the inner space.

6. The ion mobility spectrometer according to claim 1 or 3, further comprising:
an ion source located on an outside of one of open-ended faces of the inner space of the housing, for ionizing a sample component at a plurality of locations along an extending direction of the long side of the rectangular open-ended face.

7. The ion mobility spectrometer according to claim 6, wherein:

the ion source includes:

a sample spray for spraying a sample solution in a direction which is substantially orthogonal to a central axis of the open-ended face and is parallel to the extending direction of the long side of the open-ended face; and
a plurality of ionization promoters located along the extending direction of the long side of the open-ended face, for ionizing a sample component in a spray flow from the sample spray.

8. The ion mobility spectrometer according to claim 7, wherein:
the ionization promoters are either discharge electrodes for generating buffer ions for atmospheric pressure chemical ionization, or photo-irradiators for irradiating a sample component with light for atmospheric pressure photoionization.

# Fig. 1

# Fig. 2

# Fig. 3

# Fig. 4

# Fig. 5

# Fig. 6A

MEASUREMENT SYSTEM

# Fig. 6B

MEASURED RESULT

# Fig. 7

SAMPLE SOLUTION

1B

20A

20B

203

Y

X ← ⊗ Z

# Fig. 8

2B

200(200A)

206

3

205

206

22

200(200B)

Y

X ← → Z

# Fig. 9

# Fig. 10

# Fig. 11A

102

102A
102B

Y
X
Z

# Fig. 11B

V2 — 102B

V1 — 102A

ION

# Fig. 11C

V2 — 102B

V1 — 102A

ION

Z
X
Y

## INTERNATIONAL SEARCH REPORT

| International application No. |
| --- |
| PCT/JP2016/065200 |

**A. CLASSIFICATION OF SUBJECT MATTER**
*G01N27/62*(2006.01)i

According to International Patent Classification (IPC) or to both national classification and IPC

**B. FIELDS SEARCHED**

Minimum documentation searched (classification system followed by classification symbols)
G01N27/62-G01N27/70, H01J40/00-49/48

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-512633 A  (Micromass UK Ltd.), 22 April 2010 (22.04.2010), paragraph [0171] & WO 2008/071967 A2 page 41, lines 18 to 20 & US 2010/0032561 A1    & US 2013/0234016 A1 & US 2014/0145074 A1    & GB 2451149 A & EP 2092548 A2          & EP 2747124 A1 | 1-8 |
| A | JP 2009-502017 A  (Micromass UK Ltd.), 22 January 2009 (22.01.2009), fig. 9 to 11, 19, 20 & WO 2007/010272 A2 fig. 9 to 11, 19, 20 & US 2009/0134321 A1    & GB 2440364 A & EP 2637195 A2          & EP 1905061 A2 & CN 101288146 A | 1-8 |

☒  Further documents are listed in the continuation of Box C.          ☐  See patent family annex.

| | |
| --- | --- |
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 12 July 2016 (12.07.16) | 26 July 2016 (26.07.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/065200 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-526596 A  (Leco Corp.),<br>13 September 2007 (13.09.2007),<br>paragraph [0049]; fig. 5<br>& WO 2005/001878 A2<br>page 15, lines 19 to 24<br>& US 2007/0029473 A1    & KR 10-2006-0026053 A<br>& GB 2403063 A         & EP 1665326 A2<br>& CN 1853255 A | 1-8 |
| A | JP 2009-146750 A  (Hitachi, Ltd.),<br>02 July 2009 (02.07.2009),<br>& US 2009/0184241 A1 | 1-8 |
| A | US 2008/0067350 A1  (Li, Gangqiang),<br>20 March 2008 (20.03.2008),<br>(Family: none) | 1-8 |
| A | T.Brunner, A large Bradbury Nielsen ion gate with flexible wire spacing based on photo-etched stainless steel grids and its characterization applying symmetric and asymmetric potentials, International Journal of Mass Spectrometry, 2012, 309, 97-103 | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005174619 A
- US 7081618 B
- US 8084732 B

**Non-patent literature cited in the description**

- **G.A. EICEMAN.** Ion Mobility Spectrometry. CRC Press, 10 December 2013